# EUROPÄISCHE PATENTSCHRIFT

(11) **EP 3 623 261 B1**
(45) Veröffentlichungstag und Bekanntmachung des Hinweises auf die Patenterteilung: **10.11.2021**
(21) Anmeldenummer: 19195634.1
(22) Anmeldetag: 05.09.2019
(51) Int. Cl.: B62D 6/00, B62D 5/00, B62D 5/04

(54) **VERFAHREN ZUM EINSTELLEN EINES RÜCKKOPPLUNGSMOMENTS AN EINER LENKHANDHABE EINES KRAFTFAHRZEUGS, LENKSYSTEM UND KRAFTFAHRZEUG**
METHOD FOR ADJUSTING A FEEDBACK TORQUE ON A STEERING HANDLE OF A MOTOR VEHICLE, STEERING SYSTEM AND MOTOR VEHICLE
PROCÉDÉ DE RÉGLAGE D'UN COUPLE DE RÉTROACTION SUR UNE MANETTE DE DIRECTION D'UN VÉHICULE AUTOMOBILE, SYSTÈME DE DIRECTION ET VÉHICULE AUTOMOBILE

(30) Priorität: 12.09.2018 DE 102018215556
(43) Veröffentlichungstag der Anmeldung: 18.03.2020
(73) Patentinhaber: Volkswagen AG, 38440 Wolfsburg (DE)
(72) Erfinder: Dreyer, Dirk, 31655 Stadthagen (DE)

(56) Entgegenhaltungen:
- DE-A1-102011 109 711
- US-A1- 2008 249 685

## Beschreibung

Die Erfindung betrifft ein Verfahren zum Einstellen eines Rückkopplungsmoments an einer Lenkhandhabe eines Kraftfahrzeugs, ein Lenksystem und ein Kraftfahrzeug. Die Erfindung betrifft insbesondere das Gebiet von sogenannten steer-by-wire Lenksystemen bzw. Verfahren zum Betreiben von steer-by-wire Lenksystemen.

Steer-by-wire-Lenksysteme sind typischerweise dadurch gekennzeichnet, dass eine mit der Lenkhandhabe verbundene Eingangswelle keinen mechanischen Durchgriff mehr aufweist, beispielsweise zu einer die Lenkbewegung umsetzenden Zahnstange, die mit Fahrzeugrädern gekoppelt ist. Dadurch geht auch das haptische Feedback von der Straße auf die Lenkung zur Lenkhandhabe verloren. Daher ist es bekannt, einen Aktor (z.B. einen Elektromotor) zur Erzeugung einer Reaktionskraft oder, anders ausgedrückt, eines Rückkopplungsmoments vorzusehen, der unter anderem in Abhängigkeit vom eingestellten Lenkwinkel ein Gegenmoment an der Lenkhandhabe erzeugt. Der Lenkwinkel wird dabei üblicherweise anhand einer Zahnstangenposition ermittelt. Der Reaktionskraft-Aktor wird ferner oftmals dazu verwendet, eine Positionsvorgabe (Zahnstangepositionsvorgabe) auszugeben, um die Zahnstange nach Maßgabe einer Lenkhandhabebetätigung zu bewegen und dadurch den Lenkwinkel von wenigstens einem Fahrzeugrad einzustellen.

Das Rückkopplungsmoment wirkt typischerweise entgegen einer Auslenkung der Lenkhandhabe durch den Fahrer. Je nach der (manuell) ausgeführten Lenkbewegung kann das Rückkopplungsmoment somit die Lenkhandhabe in eine Neutralstellung zurückdrängen oder die Lenkhandhabe weiter aus der Neutralstellung bewegen, wobei die Neutralstellung in der Regel einer Geradeausfahrt mit einem (Fahrzeugrad-) Lenkwinkel von 0° entspricht. Übt der Fahrer jedoch kein aktives Lenkmoment auf die Lenkhandhabe aus, kann das Rückkopplungsmoment zu unerwünschten Bewegungen der Lenkhandhabe und/oder der Zahnstange führen und insbesondere zu dem kritischen Fall des sogenannten Selbstlenkens, wenn das Rückkopplungsmoment von der Neutralstellung weg gerichtet ist.

In der DE 198 06 458 B4 wird eine Freihandfahrt erkannt und in Reaktion darauf eine Reaktionskrafterzeugung unterbrochen. Die Freihandfahrt wird durch Auftreten eines sogenannten Selbstausrichtungsdrehmoments der Fahrzeugräder erkannt.

Aus der DE 102 48 343 A1 ist ein Verfahren zur Ermittlung eines Lenkradrückstellmoments bekannt, das mit einem Zusatzmoment zur Informationsübermittlung an den Fahrer als auch zur Fahrerführung überlagerbar ist. In diesem Zusammenhang wird auch eine Freihanderkennung erwähnt, ohne deren Rolle näher zu erläutern.

Die US 2008/249685 A1, die als nächstliegender Stand der Technik angesehen wird, offenbart eine Fahrzeuglenksteuerung nach Steer-by-Wire-Art, bei der im Freihandbetrieb eine erzeugte Lenkreaktionskraft reduziert werden kann. Weiterer technologischer Hintergrund findet sich in der DE 10 2011 109 711 A1.

Aufgabe der vorliegenden Erfindung ist es, den Betrieb von Lenksystemen, die zum Erzeugen von Rückkopplungsmomenten eingerichtet sind, zu verbessern.

Diese Aufgabe wird durch ein Verfahren mit den Merkmalen von Anspruch 1, ein Lenksystem mit den Merkmalen von Anspruch 6 und ein Fahrzeug mit den Merkmalen von Anspruch 7 gelöst. Es versteht sich, dass sämtliche der einleitend genannten Merkmale, allein oder in beliebiger Kombination, auch bei der vorliegenden Erfindung vorgesehen sein können.

Erfindungsgemäß wurde erkannt, dass die bekannten Lösungen vergleichsweise einfache und nicht stets präzise Methoden zum Ermitteln einer Freihandfahrt bereitstellen. Zudem kann es durch eine Unterbrechung der Erzeugung des Rückkopplungsmoments aus Sicht eines Fahrers zu einem unerwarteten Fahrzeugverhalten kommen.

Ein Grundgedanke der vorliegenden Erfindung beruht deshalb darauf, einen Freihandbetrieb (d.h. eine Freihandfahrt) zuverlässig festzustellen und darauf basierend das Rückkopplungsmoment geeignet anzupassen, dessen Erzeugung aber nicht zwingendermaßen vollständig zu unterbrechen. Gemäß weiterer Ausführungsformen werden Möglichkeiten aufgezeigt, um den Freihandbetrieb möglichst präzise und zuverlässig zu bestimmen. Hierfür können insbesondere auf die Lenkhandhabe aufgebrachte Handlenkmomente erfasst werden. Im Detail wird ein Verfahren zum Einstellen eines Rückkopplungsmoments an einer Lenkhandhabe eines Kraftfahrzeugs und insbesondere bei einem Steer-by-wire-Lenksystem vorgeschlagen, wobei in einem Normalbetrieb, in dem ein Fahrer die Lenkhandhabe greift, ein Rückkopplungsmoment an der Lenkhandhabe nach Maßgabe eines mittels der Lenkhandhabe vorgegebenen (Fahrzeugrad-) Lenkwinkels einstellbar ist; und wobei das Verfahren umfasst:
- Ermitteln, ob ein Freihandbetrieb vorliegt, in dem der Fahrer die Lenkhandhabe nicht greift, basierend auf einer sensorischen Erfassung eines etwaigen Kontakts des Fahrers und der Lenkhandhabe,
und wenn der Freihandbetrieb vorliegt:
- Erzeugen eines Rückkopplungsmoments, das von Null verschieden ist und einen gegenüber dem Normalbetrieb geringeren Wert aufweist,
wobei zusätzlich ermittelt wird, ob das Rückkopplungsmoment in einer Richtung wirkt, in der die Lenkhandhabe (2) weiter aus einer Neutralstellung bewegt wird, und eine Reduzierung des Rückkopplungsmoments im Freihandbetrieb nur dann durchgeführt wird, wenn dies der Fall ist.

Bei der Lenkhandhabe kann es sich um ein Lenkrad handeln. Das Rückkopplungsmoment kann auf eine mit dem Lenkrad gekoppelte Eingangswelle aufgebracht werden, beispielsweise mit einem Rückkopplungsaktor, der vorzugsweise ein Elektromotor ist. Das Fahrzeug kann ein Kraftfahrzeug sein und insbesondere ein Personenkraftwagen.

Unter einem Greifen der Lenkhandhabe kann ein Zustand verstanden werden, bei der der Fahrer manuell und insbesondere über Handbewegungen und/oder durch einen Kontakt zu der Lenkhandhabe diese Betätigen und insbesondere ein Handlenkmoment darauf aufbringen kann. Dies kann zum Beispiel durch Greifen der Lenkhandhabe mit wenigstens einer und vorzugsweise mit zwei Händen des Fahrers erfolgen.

Wenn der Freihandbetrieb festgestellt wurde, kann das erzeugte Rückkopplungsmoment gegenüber demjenigen Rückkopplungsmoment geringer sein, das im Normalbetrieb nach Maßgabe des aktuell vorgegebenen Lenkwinkels erzeugt worden wäre. Anders ausgedrückt kann neben dem Ermitteln des Freihandbetriebs auch ein aktueller (vorgegebener) Lenkwinkel ermittelt werden und kann in Abhängigkeit hiervon ein (Freihand-) Rückkopplungsmoment erzeugt werden, das jedoch geringer ist, als dasjenige Rückkopplungsmoment, das bei diesem Lenkwinkel im Normalbetrieb erzeugt werden würde. Es wird jedoch ein von Null verschiedenes Rückkopplungsmoment erzeugt und somit keine vollständige Unterbrechung der Rückkopplung durchgeführt, was das Risiko von unerwarteten Verhaltensänderungen des Fahrzeugs gegenüber dem Normalbetrieb verringert.

Zum Ermitteln eines etwaigen (d. h. möglichen) Kontakts des Fahrers und der Lenkhandhabe kann die Lenkhandhabe einen Kontaktsensor umfassen, mit der Kontakte insbesondere von Händen des Fahrers und der Lenkhandhabe erfassbar sind. Die sensorische Kontakterfassung beruht dabei vorzugsweise auf einem kapazitiven Messprinzip.

Das Rückkopplungsmoment kann im Freihandbetrieb um wenigstens ein Drittel, wenigstens die Hälfte oder wenigstens zwei Drittel geringer als im Normalbetrieb sein, insbesondere verglichen zu dem bei einem aktuellen Lenkwinkel eingestellten Rückkopplungsmoment im Normalbetrieb.

Beispielsweise kann das Rückkopplungsmoment zwischen einem Viertel und der Hälfte des entsprechenden Rückkopplungsmoments im Normalbetrieb betragen. Dies ist dahingehend vorteilhaft, als dass dadurch die Wahrscheinlichkeit erhöht wird, dass der Fahrer insbesondere bei einem von der Neutralstellung weg weisenden Rückkopplungsmoment rechtzeitig reagieren und unerwartete Lenkbewegungen unterbinden kann.

Erfindungsgemäß wird ermittelt, ob das Rückkopplungsmoment in eine Richtung wirkt, in der die Lenkhandhabe weiter aus einer Neutralstellung bewegt wird (d. h. das Rückkopplungsmoment ist von der Neutralstellung weg gerichtet oder, mit anderen Worten, das Rückkopplungsmoment wirkt selbstlenkend). Eine Reduzierung des Rückkopplungsmoments im Freihandbetrieb kann darauf basierend nur dann durchgeführt werden, wenn eine entsprechende Wirkung des Rückkopplungsmoments festgestellt wird. Zur Überprüfung kann die von einer (Rückkopplungs-) Regeleinrichtung ausgegebene Stellgröße (zum Beispiel ein Soll-Rückkopplungsmoment) und/oder eine aktuelle Stellung der Lenkhandhabe herangezogen werden, die beispielsweise mittels eines Drehmomentsensors der Lenkhandhabe ermittelt werden kann.

Eine Ausführungsform sieht vor, dass insbesondere zusätzlich zu dem sensorischen Erfassen eines Kontakts des Fahrers zur Lenkhandhabe ein auf die Lenkhandhabe aufgebrachtes Handlenkmoment bestimmt wird, beispielsweise mittels eines Drehmomentsensors der Lenkhandhabe bzw. des Lenksystems. Darauf basierend kann zuverlässig ermittelt werden, ob ein Freihandbetrieb vorliegt, beispielsweise wenn kein Drehmoment oder ein Drehmoment unterhalb eines (vorzugsweise sehr niedrigen) Schwellenwerts ausgeübt wird.

Insbesondere kann das Handlenkmoment zusätzlich zu dem sensorischen Erfassen eines Kontakts des Fahrers zur Lenkhandhabe bestimmt werden und ein Freihandbetrieb dann erkannt werden, wenn sowohl mittels der sensorischen Erfassung kein Kontakt angezeigt wird, als auch kein Drehmoment oder lediglich ein Drehmoment unterhalb eines Schwellenwerts festgestellt wird. Dies ermöglicht eine zusätzliche Absicherung und somit eine besonders zuverlässige Detektion des Freihandbetriebs.

Die Erfindung betrifft ferner ein (insbesondere steer-by-wire-) Lenksystem, mit:
- einer Lenkhandhabe (insbesondere einem Lenkrad),
- einem Rückkopplungsaktuator (insbesondere einem Elektromotor), der dazu eingerichtet ist, ein Rückkopplungsmoment an der Lenkhandhabe nach Maßgabe eines mittels der Lenkhandhabe vorgegebenen (Fahrzeugrad-) Lenkwinkels einzustellen; und
- einer Steuereinrichtung, die dazu eingerichtet ist, zu ermitteln, ob ein Freihandbetrieb vorliegt, in dem ein Fahrer die Lenkhandhabe nicht greift, und wenn dies der Fall ist, ein Rückkopplungsmoment einzustellen (z.B. durch Ausgeben entsprechender Steuersignale an den Rückkopplungsaktuator), das von Null verschieden ist und einen gegenüber dem Normalbetrieb geringeren Wert aufweist,
wobei die Steuereinrichtung ferner dazu eingerichtet ist, zu ermitteln, ob das Rückkopplungsmoment in einer Richtung wirkt, in der die Lenkhandhabe weiter aus einer Neutralstellung bewegt wird, und eine Reduzierung des Rückkopplungsmoments im Freihandbetrieb nur dann durchgeführt wird, wenn dies der Fall ist.

Sämtliche vorstehenden und nachstehenden Erläuterungen, Weiterbildungen und Merkmale, die sich auf gleichlautende Verfahrensmerkmale beziehen, können bei dem Lenksystem ebenso vorgesehen sein. Insbesondere kann das Lenksystem dazu eingerichtet sein, ein Verfahren gemäß jeglichen der vorstehenden und nachstehenden Aspekte auszuführen.

Die Steuereinrichtung kann eine Regeleinrichtung sein oder eine solche umfassen, insbesondere für das Einstellen des Rückkopplungsmoments und/oder das Ausgeben einer Positionsvorgabe (insbesondere eine Zahnstangenpositionsvorgabe) an einen Aktor, der eine mit Fahrzeugrädern gekoppelte Zahnstange des Lenksystems bewegt.

Schließlich betrifft die Erfindung auch ein Fahrzeug, umfassend ein Lenksystem gemäß einem der vorangehenden Aspekte.

Im Folgenden wird eine Ausführungsform der Erfindung anhand der beigefügten Figuren erläutert. Es stellen dar:
Fig. 1 eine schematische Prinzipskizze eines Lenksystems gemäß einem Ausführungsbeispiel der Erfindung; und
Fig. 2 ein Ablaufschema eines erfindungsgemäßen Verfahrens, das mit dem Lenksystem aus Figur 1 ausführbar ist.

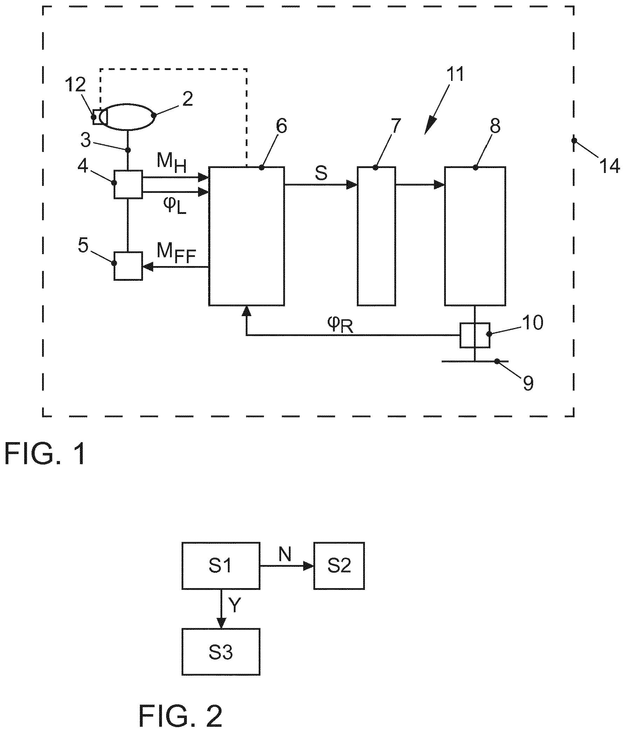

In Figur 1 ist ein steer-by-wire-Lenksystem 1 gemäß einem Ausführungsbeispiel der Erfindung als schematische Prinzipskizze gezeigt. Das Lenksystem 1 ist Bestandteil eines lediglich strichliert angedeuteten Fahrzeugs 14.

Das steer-by-wire-Lenksystem 1 umfasst eine Lenkhandhabe 2 in Form eines Lenkrads, das mit einer Eingangswelle 3 verbunden ist. An der Eingangswelle 3 ist ein Momentensensor 4 zur Erfassung eines Handmoments M_{H} des Fahrers angeordnet sowie ein Rückkoplungsaktuator 5 zur Erzeugung eines Rückkopplungsmoments M_{FF} an der Lenkhandhabe 2, was dem Erzeugen einer Reaktionskraft entspricht. Zusätzlich kann eine Winkellage ϕ_{L} der Lenkhandhabe 2 bestimmt werden, beispielsweise mit dem Momentensensor 4 oder mit einem separaten Sensor (nicht dargestellt). Anhand dieser Winkellage ϕ_{L} und insbesondere deren Änderung kann beispielsweise auch ermittelt werden, ob die Lenkhandhabe 2 gerade aus einer Neutralstellung bewegt wird oder in Richtung der Neutralstellung. Alternativ oder zusätzlich kann dies anhand des Vorzeichens des Handmoments M_{H} bestimmt werden.

Weiter umfasst das steer-by-wire-Lenksystem 1 eine Steuereinrichtung in Form eines Lenkungssteuergeräts 6 sowie einen Fahrzeugradaktor 11, umfassend eine Leistungselektronik 7 und einen elektrischen Servo-Motor 8, der mit einer Zahnstange 9 beispielsweise über ein nicht dargestelltes Kugelkopfgetriebe verbunden ist. Der elektrische Servo-Motor 8 ist mit einem Rotorlagesensor 10 ausgebildet, aus dessen Rotorwinkelsignal ϕ_{R} auf die Zahnstangenposition zurückgerechnet werden kann.

In dem Lenkungssteuergerät 6 wird anhand des Handmoments M_{H} und weiterer Eingangsgrößen wie z.B. der Kraftfahrzeuggeschwindigkeit auch ein Lenkwinkel ermittelt, der durch den Fahrzeugradaktor 11 bzw. dessen Servo-Motor 8 über die Zahnstange 9 an den Fahrzeugrädern eingestellt werden soll. Hierzu erzeugt das Lenkungssteuergerät 6 eine Stellgröße oder, anders ausgedrückt, ein Stellsignal S für die Leistungselektronik 7. Die Stellgröße S kann auch als Zahnstangenpositionsvorgabe bezeichnet werden, wobei über die entsprechend vorgegebene Zahnstangenposition der gewünschte Lenkwinkel eingestellt wird. Das Rotorwinkelsignal ϕ_{R} kann als Ist-Signal für das Ermitteln der Stellgröße S verwendet werden (beispielsweise durch Umrechnen in eine Ist-Zahnstangenposition).

Weiter gezeigt ist, dass die Lenkhandhabe 2 einen kapazitiven Kontaktsensor 12 umfasst. Dieser kann sich entgegen der Darstellung in Figur 1 umlaufend entlang der Lenkhandhabe 2 erstrecken und somit Kontakte des Fahrers bzw. ein Umgreifen der Lenkhandhabe 2 an verschiedenen Positionen erfassen. Wird kein Kontakt ermittelt, wird ein Freihandbetrieb erkannt, bei dem der Fahrer die Lenkhandhabe 2 nicht greift. Die Signale des Kontaktsensors 12 können über eine strichliert angedeutete Kommunikationsverbindung (zum Beispiel einen Fahrzeugbus) an das Lenkungssteuergerät 6 übermittelt werden.

Im Normalbetrieb, der sich dadurch auszeichnet, dass mittels des Kontaktsensors 12 ein Umgreifen der Lenkhandhabe 2 durch den Fahrer erkannt wird, wird ein Rückkopplungsmoment M_{FF} basierend auf dem aktuellen Rotorwinkelsignal ϕ_{R} und/oder einer Änderung hiervon durch das Lenksteuergerät 6 ermittelt. Insbesondere kann in an sich bekannter Weise mittels einer Modellbildung auf eine vorliegende Zahnstangenkraft geschlossen werden und nach Maßgabe dieser Zahnstangenkraft ein Wert des Rückkopplungsmoments M_{FF} bestimmt werden.

In einem Freihandelbetrieb, in dem basierend auf den Signalen des Kontaktsensors 12 kein Umgreifen der Lenkhandhabe 2 festgestellt wird, wird das Rückkopplungsmoment M_{FF} gegenüber dem im Normalbetrieb bei der aktuellen Fahrsituation (d. h. zum Beispiel bei derselben Zahnstangenposition und/oder demselben Lenkwinkel) eigentlich vorzugebende Rückkopplungsmoment M_{FF} reduziert, insbesondere um wenigstens ein Drittel.

Erfindungsgemäß wird als ein weiterer Prüfschritt von dem Lenkungssteuergerät 6 ermittelt, ob das Rückkopplungsmoment M_{FF} hin zu einer Neutralstellung der Lenkhandhabe 2 oder von dieser weg wirkt (beispielsweise basierend auf einem Vorzeichen des Rückkopplungsmoment M_{FF}). Eine Reduzierung des Rückkopplungsmoments M_{FF} gegenüber dem Normalbetrieb kann dann nur in denjenigen Fällen erfolgen, in denen das Rückkopplungsmoment M_{FF} von der Neutralstellung weg wirkt, um ein sogenanntes Selbstlenken zu vermeiden.

Ferner optional kann vorgesehen sein, dass als Voraussetzung für das Vorliegen eines Freihandbetriebs auch der Wert des ermittelten Handlenkmoments M_{H} bestimmt wird. Nur wenn dieser verschieden von Null ist und insbesondere unterhalb eines vorbestimmten (zum Beispiel einer Toleranzgrenze bzw. Rauschgrenze entsprechenden) Schwellenwertes liegt, kann das Lenkungssteuergerät 6 tatsächlich auf das Vorliegen eines Freihandbetriebs schließen. Mit anderen Worten kann als Voraussetzung für das Vorliegen des Freihandbetriebs definiert sein, dass der Kontaktsensor 12 keinen Kontakt anzeigt und das Handlenkmoment M_{H} unterhalb eines entsprechenden Schwellenwertes liegt.

In Figur 2 ist ein Ablaufschema eines Verfahrens gezeigt, das mit der Vorrichtung aus Figur 1 ausführbar ist. In einem Schritt S1 wird eine Ermittlung dahingehend durchgeführt, ob ein Freihandbetrieb vorliegt oder nicht. Dies kann gemäß jeglicher der oben genannten Varianten erfolgen.

Im Rahmen von Schritt S1 kann optional auch die Wirkrichtung (entgegen oder in Richtung der Neutralstellung) eines aktuellen Rückkopplungsmoments M_{FF} ermittelt werden. Alternativ kann dies nach Bestimmen eines neuen Werts für das Rückkopplungsmoment M_{FF} erfolgen, beispielsweise bevor dieses mit dem Rückkopplungsaktuator 5 tatsächlich umgesetzt wird.

Wird kein Freihandbetrieb festgestellt (Pfeil N), wird mit dem Schritt S2 fortgefahren, bei dem ein Rückkopplungsmoment M_{FF} gemäß dem Normalbetrieb an der Lenkhandhabe 2 eingestellt wird.

Wird der Freihandbetrieb ermittelt (Pfeil Y), wird mit dem Schritt S3 fortgefahren und ein gegenüber dem Normalbetrieb reduziertes Rückkopplungsmoment M_{FF} an der Lenkhandhabe eingestellt. Beispielsweise kann zunächst das bei der aktuellen Fahrsituation (insbesondere bei dem aktuellen Lenkwinkel) und im Normalbetrieb vorgesehene Rückkopplungsmoment M_{FF} bestimmt werden und dessen Wert mit einem vorbestimmten (vorzugsweise konstanten) Faktor multipliziert werden, um das Rückkopplungsmoment M_{FF} für den Freihandbetrieb zu ermitteln. Der Faktor kann zum Beispiel nicht mehr als 0,5, nicht mehr als 0,3 oder nicht mehr als 0,25 betragen.

### Bezugszeichenliste

- 1: Lenksystem
- 2: Lenkhandhabe
- 3: Eingangswelle
- 4: Drehmomentsensor
- 5: Rückkopplungsaktuator
- 6: Lenkungssteuergerät / Steuereinrichtung
- 7: Leistungselektronik
- 8: Servo-Motor
- 9: Zahnstange
- 10: Rotorlagesensor
- 11: Fahrzeugradaktor
- 12: Kontaktsensor
- 14: Fahrzeug
- M_{H}: Handlenkmoment
- M_{FF}: Rückkopplungsmoment
- ϕ_{R}: Rotorwinkelsignal
- ϕ_{L}: Winkellage

## Patentansprüche

1. Verfahren zum Einstellen eines Rückkopplungsmoments (M_{FF}) an einer Lenkhandhabe (2) eines Fahrzeugs (14),
wobei in einem Normalbetrieb, in dem ein Fahrer die Lenkhandhabe (2) greift, ein Rückkopplungsmoment (M_{FF}) an der Lenkhandhabe (2) nach Maßgabe eines mittels der Lenkhandhabe (2) vorgegebenen Lenkwinkels einstellbar ist; und
wobei das Verfahren umfasst:
- Ermitteln, ob ein Freihandbetrieb vorliegt, in dem der Fahrer die Lenkhandhabe (2) nicht greift, basierend auf einer sensorischen Erfassung eines etwaigen Kontakts des Fahrers und der Lenkhandhabe (2),
und wenn der Freihandbetrieb vorliegt:
- Erzeugen eines Rückkopplungsmoments (M_{FF}), das von Null verschieden ist und einen gegenüber dem Normalbetrieb geringeren Wert aufweist,
**dadurch gekennzeichnet, dass**
zusätzlich ermittelt wird, ob das Rückkopplungsmoment (M_{FF}) in einer Richtung wirkt, in der die Lenkhandhabe (2) weiter aus einer Neutralstellung bewegt wird, und eine Reduzierung des Rückkopplungsmoments (M_{FF}) im Freihandbetrieb gegenüber dem Normalbetrieb nur dann durchgeführt wird, wenn dies der Fall ist.

2. Verfahren nach Anspruch 1,
wobei die Kontakterfassung zwischen Fahrer und Lenkhandhabe (2) mittels eines kapazitiven Messprinzips erfolgt.

3. Verfahren nach Anspruch 1 oder 2,
wobei das Rückkopplungsmoment (M_{FF}) im Freihandbetrieb um wenigstens ein Drittel, wenigstens die Hälfte oder wenigstens zwei Drittel geringer als im Normalbetrieb ist.

4. Verfahren nach einem der vorangehenden Ansprüche,
wobei ein auf die Lenkhandhabe (2) aufgebrachtes Handlenkmoment (M_{FF}) bestimmt wird und darauf basierend ermittelt wird, ob ein Freihandbetrieb vorliegt.

5. Verfahren nach Anspruch 4,
wobei der Freihandbetrieb dann erkannt wird, wenn ein Handlenkmoment unterhalb eines Schwellenwerts erfasst wird.

6. Lenksystem (1), mit:
- einer Lenkhandhabe (2),
- einem Rückkopplungsaktuator (5), der dazu eingerichtet ist, ein Rückkopplungsmoment an der Lenkhandhabe (2) nach Maßgabe eines mittels der Lenkhandhabe (2) vorgegebenen Lenkwinkels einzustellen; und
- einer Steuereinrichtung (6), die dazu eingerichtet ist, zu ermitteln, ob ein Freihandbetrieb vorliegt, in dem ein Fahrer die Lenkhandhabe (2) nicht greift, und wenn dies der Fall ist, ein Rückkopplungsmoment (M_{FF}) einzustellen, das von Null verschieden ist und einen gegenüber dem Normalbetrieb geringeren Wert aufweist,
**dadurch gekennzeichnet, dass**
die Steuereinrichtung (6) ferner dazu eingerichtet ist, zu ermitteln, ob das Rückkopplungsmoment (M_{FF}) in einer Richtung wirkt, in der die Lenkhandhabe (2) weiter aus einer Neutralstellung bewegt wird, und eine Reduzierung des Rückkopplungsmoments (M_{FF}) im Freihandbetrieb gegenüber dem Normalbetrieb nur dann durchgeführt wird, wenn dies der Fall ist.

7. Fahrzeug (14),
umfassend ein Lenksystem (1) nach Anspruch 7.

## Claims

1. Method for adjusting a feedback torque (M_{FF}) on a steering handle (2) of a motor vehicle (14),
wherein, in normal operation in which a driver grips the steering handle (2), a feedback torque (M_{FF}) on the steering handle (2) can be adjusted according to a steering angle predetermined by means of the steering handle (2); and
wherein the method comprises:
- determining whether a hands-free operation, in which the driver does not grip the steering handle (2), exists based on a sensory detection of a possible contact of the driver and the steering handle (2),
and if a hands-free operation exists:
- generating a feedback torque (M_{FF}) which is different from zero and has a lower value compared to normal operation,
**characterized in that**
it is additionally determined whether the feedback torque (M_{FF}) acts in a direction in which the steering handle (2) is moved further out of a neutral position, and a reduction in the feedback torque (M_{FF}) in hands-free operation compared to normal operation is only effected when this is the case.

2. Method according to claim 1,
wherein the contact detection between the driver and the steering handle (2) takes place by means of a capacitive measuring principle.

3. Method according to claim 1 or 2,
wherein the feedback torque (M_{FF}) in hands-free operation is less than in normal operation by at least one third, at least half, or at least two thirds.

4. Method according to any one of the preceding claims,
wherein a manual steering torque (M_{FF}) applied to the steering handle (2) is determined and, based thereon, it is determined whether a hands-free operation exists.

5. Method according to claim 4,
wherein the hands-free operation is detected when a manual steering torque below a threshold value is detected.

6. Steering system (1), comprising:
- a steering handle (2),
- a feedback actuator (5) designed to adjust a feedback torque on the steering handle (2) according to a steering angle predetermined by means of the steering handle (2); and
- a control device (6) configured to determine whether a hands-free operation, in which a driver does not grip the steering handle (2), exists and, if this is the case, to adjust a feedback torque (M_{FF}) which is different from zero and has a lower value than normal operation,
**characterized in that**
the control device (6) is furthermore configured to determine whether the feedback torque (M_{FF}) acts in a direction in which the steering handle (2) is moved further out of a neutral position, and a reduction in the feedback torque (M_{FF}) during hands-free operation compared to normal operation is only effected when this is the case.

7. Vehicle (14),
comprising a steering system (1) according to claim 7.

## Revendications

1. Procédé de réglage d'un couple de rétroaction (M_{FF}) sur une manette de direction (2) d'un véhicule (14),
dans lequel, dans un fonctionnement normal, dans lequel un conducteur saisit la manette de direction (2), un couple de rétroaction (M_{FF}) est réglable sur la manette de direction (2) conformément à un angle de direction prédéfini au moyen de la manette de direction (2) ; et
dans lequel le procédé comprend :
- la détermination si un fonctionnement mains libres est présent, dans lequel le conducteur ne saisit pas la manette de direction (2), sur la base d'une détection sensorielle d'un contact éventuel du conducteur et de la manette de direction (2),
et lorsque le fonctionnement mains libres est présent :
- la génération d'un couple de rétroaction (M_{FF}), qui n'est pas nul et qui présente une valeur réduite par rapport au fonctionnement normal,
**caractérisé en ce que**
il est en outre déterminé si le couple de rétroaction (M_{FF}) agit dans une direction, dans laquelle la manette de direction (2) est déplacée plus loin à partir d'une position neutre, et une réduction du couple de rétroaction (M_{FF}) dans le fonctionnement mains libres par rapport au fonctionnement normal est effectuée uniquement lorsque cela est le cas.

2. Procédé selon la revendication 1,
dans lequel la détection de contact entre le conducteur et la manette de direction (2) est effectuée au moyen d'un principe de mesure capacitive.

3. Procédé selon la revendication 1 ou 2,
dans lequel le couple de rétroaction (M_{FF}) est inférieur, dans le fonctionnement mains libres, d'au moins un tiers, d'au moins la moitié ou d'au moins deux tiers à celui dans le fonctionnement normal.

4. Procédé selon l'une quelconque des revendications précédentes,
dans lequel un couple de changement de direction manuel (M_{FF}) appliqué sur la manette de direction (2) est déterminé et, sur la base de celui-ci, il est déterminé si un fonctionnement mains libres est présent.

5. Procédé selon la revendication 4,
dans lequel le fonctionnement mains libres est reconnu lorsqu'un couple de changement de direction manuel inférieur à une valeur seuil est détecté.

6. Système de direction (1) comprenant :
- une manette de direction (2),
- un actionneur de rétroaction (5), qui est conçu pour régler un couple de rétroaction sur la manette de direction (2) conformément à un angle de direction prédéfini au moyen de la manette de direction (2) ; et
- un dispositif de commande (6), qui est conçu pour déterminer si un fonctionnement mains libres est présent, dans lequel le conducteur ne saisit pas la manette de direction (2) et, lorsque tel est le cas, pour régler un couple de rétroaction (M_{FF}) qui n'est pas nul et qui présente une valeur inférieure par rapport au fonctionnement normal,
**caractérisé en ce que**
le dispositif de commande (6) est en outre conçu pour déterminer si le couple de rétroaction (M_{FF}) agit dans une direction, dans laquelle la manette de direction (2) est déplacée plus loin à partir d'une position neutre, et une réduction du couple de rétroaction (M_{FF}) dans le fonctionnement mains libres par rapport au fonctionnement normal est effectuée uniquement lorsque cela est le cas.

7. Véhicule (14),
comprenant un système de direction (1) selon la revendication 7.
